(19) Europäisches Patentamt
European Patent Office
Office européen des brevets

(11) **EP 2 629 989 B1**

(12) **EUROPEAN PATENT SPECIFICATION**

(45) Date of publication and mention
of the grant of the patent:
**07.01.2015 Bulletin 2015/02**

(51) Int Cl.:
***B60C 9/20*** *(2006.01)*   ***B60C 9/08*** *(2006.01)*

(21) Application number: **11773255.2**

(86) International application number:
**PCT/EP2011/068406**

(22) Date of filing: **21.10.2011**

(87) International publication number:
**WO 2012/052534 (26.04.2012 Gazette 2012/17)**

(54) **TYRE WITH THIN SIDEWALLS AND IMPROVED HOOPING REINFORCEMENT**

REIFEN MIT DÜNNEN SEITENWÄNDEN UND VERBESSERTER UMREIFUNGSVERSTÄRKUNG

PNEUMATIQUE À FLANCS MINCES ET RENFORCEMENT DE FRETTE AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2011 US 201161440718 P**
**22.10.2010 FR 1058661**

(43) Date of publication of application:
**28.08.2013 Bulletin 2013/35**

(73) Proprietors:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventors:
• **MOREL-JEAN, Jacques**
**63040 Clermont-Ferrand Cedex 09 (FR)**
• **LE CLERC, Christophe**
**63040 Clermont-Ferrand Cedex 9 (FR)**

(74) Representative: **Sidhu, Alban et al**
**MFP Michelin**
**Cer Ladoux-F35-DGD/PI**
**23, place des Carmes-Déchaux**
**63040 Clermont-Ferrand Cedex 9 (FR)**

(56) References cited:
**EP-A1- 1 106 390**

**Description**

FIELD OF THE INVENTION

The present invention relates to tyres for passenger vehicles.

BACKGROUND

The tyres of a vehicle, together with the wheels and axles, form the unsuspended masses of the vehicle. For safety and comfort reasons, vehicle manufacturers are seeking to reduce these unsuspended masses as far as possible. The development of lightweight wheels, in which the weight reduction has been achieved through the use of lightweight materials or lightweight constructions, falls within this context. The tyres also constitute a significant proportion of the unsuspended masses and this is why reducing tyre weight is a priority for tyre manufacturers. Moreover, the mass of a tyre translates into a cost in terms of raw materials. If the mass of a tyre can be reduced without significantly increasing the cost of the materials used then the reduction in mass will lead to a reduction in the cost price of the tyre.

Efforts aimed at reducing the mass of tyres naturally reach limits and can give rise to difficulties. When the weight reduction is obtained by making the sidewall thinner (for an example of a light-weight tyre having thin sidewalls see, for instance, document EP-A 0 988 159), annoying defects of appearance sometimes appear. One of these defects of appearance is that when the tyre leaves the curing press, its sidewall has shrunk and forms circumferential ripples. This defect of appearance, also known as rippling, presents no danger to the user of the tyre because it disappears when the tyre is mounted on its mounting rim and inflated to its service pressure. Nonetheless, it does create difficulties of a psychological nature because the user may have the impression that the tyre before him is defective. Because the phenomenon no longer appears once the tyre has been deflated following first inflation, it is possible to overcome the problem by systematically inflating and then deflating the tyres before selling them, but this solution is cumbersome and expensive to implement. It is therefore essential for a manufacturer to control this phenomenon and prevent it from occurring.

SUMMARY OF THE INVENTION

One of the objectives of the present invention is to provide a tyre with sidewalls that are thinner but do not have the defect of appearance mentioned above when they leave the curing press.

This objective is achieved through a tyre comprising two beads configured to come into contact with a mounting rim, each bead comprising at least one annular reinforcing structure, the annular reinforcing structure having, in any radial section, at least one radially innermost point; two sidewalls extending the beads radially outwards, the two sidewalls joining together in a crown comprising a crown reinforcement and a hooping reinforcement, positioned radially on the outside of the crown reinforcement and surmounted by a tread made of at least one first rubber compound.

A carcass reinforcement extends from the beads through the sidewalls as far as the crown, the carcass reinforcement comprising a plurality of carcass reinforcing elements and being anchored in the two beads by turning back around the annular reinforcing structure so as to form, within each bead, a main portion and a wrapped-around portion.

The tyre has a median plane which, in any radial section, divides the tyre into two tyre halves.

Each tyre half comprises at least one outer strip made of at least one second rubber compound and positioned at least partially axially on the outside of the wrapped-around portion of the carcass reinforcement, each outer strip extending radially as far as a radially outer end, DI denoting the radial distance between the radially outer end of the outer strip and the radially innermost point of the annular reinforcing structure.

The tread comprises, in any radial section and in each tyre half, at least one radially innermost point, DE denoting the radial distance between this radially innermost point of the tread and the radially innermost point of the annular reinforcing structure.

The crown reinforcement comprises a radially inner layer and a radially outer layer, each of the layers being reinforced with threadlike reinforcing elements, the reinforcing elements in each layer being substantially parallel to one another, the reinforcing elements in the two layers being crossed with respect to one another. The radially outer layer of the crown reinforcement extends axially, in each radial section, on each side of the median plane of the tyre, between two axial ends of the outer layer, the hooping reinforcement extending axially on each side of the median plane of the tyre between two axial ends of the hooping reinforcement such that, in each tyre half, the axial end of the hooping reinforcement is situated axially on the outside of the axial end of the outer layer.

The sidewall comprises, in each tyre half, a first sidewall part located at radial distances that are greater than or equal to DI and less than or equal to DE from the radially innermost point of the annular reinforcing structure. (In other words, each point of the first sidewall part has a distance from the radially innermost point of the annular reinforcing structure that is greater or equal than DI and less than or equal to DE.) The sidewall part is made of at least one third rubber compound distinct from said at least one first and second rubber compounds from which the tread and the outer strip are made. As a consequence, it is possible to discern the extent of this sidewall portion in relation to the tread and the outer strip of a tyre cut. The third rubber compound has an elastic modulus E greater than or equal to 1.5 MPa and less than or equal to 10 MPa, and preferably less than or equal to 3 MPa.

The sidewall has, in the first sidewall part, a mean thickness EA, this thickness being measured perpendicular to the carcass reinforcement.

The hooping reinforcement is made of a textile material having a shrinkage force at 180°C ("FC") that is less than or equal to 12 N (and preferably greater than or equal to 3 N and less than or equal to 9 N), the hooping reinforcement being formed of at least one reinforcing element directed circumferentially, the hooping reinforcement having, in any radial section, a plurality of intersections with the plane of section such that, in each tyre half, a non-zero number NC of intersections is situated axially on the outside of the axial end of the outer layer of the crown reinforcement.

In a tyre according to an embodiment of the invention, the elastic modulus E, the mean thickness EA, the number of intersections NC and the shrinkage force at 180°C (FC) are chosen such that for each sidewall of the tyre, the following inequality is satisfied:

$$K = 100 \cdot \left( \frac{E \cdot EA^2 \cdot P}{B \cdot NC \cdot FC} \right) < 16$$

where P is the thickness of the tyre measured in a direction perpendicular to the carcass reinforcement and having an intersection with the axial end of the outer layer of the crown reinforcement which lies in the same tyre half as the sidewall, and where B is the curvilinear length of the carcass reinforcement between (a) a point on the carcass reinforcement that is at a distance DI with respect to the radially innermost point of the annular reinforcing structure, and (b) a point on the carcass reinforcement that is at a distance DE with respect to the radially innermost point of the annular reinforcing structure.

For preference, the elastic modulus E, the mean thickness EA, the number of intersections NC, and the shrinkage force at 180°C (FC) are chosen such that for each sidewall of the tyre, K < 11.

For preference, the mean thickness EA is greater than or equal to 2 mm and less than or equal to 5 mm, the number of intersections NC is greater than or equal to 3 and less than or equal to 15, and the thickness P of the tyre is greater than or equal to 8 mm and less than or equal to 15 mm.

Providing reinforcements that have a low shrinkage force at 180°C has the effect of reducing the magnitude of the forces involved and, therefore, of avoiding the defects of appearance which these cause, without, however, altering the mechanical behaviour of the crown of the tyre.

According to a preferred embodiment, the hooping reinforcement is made of a material for which the force developed at 180°C at 3% deformation is greater than or equal to 25 N.

For preference, the hooping reinforcement is made of polyester, and more preferably still of PEN (polyethylene naphthalate), PET (polyethylene terephthalate) or PK (polyketone).

PET notably has the advantage of reducing the risk of corrosion damage to the metal cords in the crown reinforcement because reinforcing elements made of PET have lower water retention.

Of course, it may be advantageous to combine several or even all of the preferred embodiments.

BRIEF DESCRIPTION OF THE DRAWINGS

Figure 1 depicts a tyre according to the prior art.

Figure 2 depicts a partial perspective view of a tyre according to the prior art.

Figure 3 depicts a radial section through a portion of a tyre.

Figure 4 depicts a radial section through a portion of a tyre according to an embodiment of the invention.

Figure 5 illustrates the concept of "high-temperature shrinkage force".

Figure 6 shows the force/elongation curve for four types of textile reinforcing elements.

DETAILED DESCRIPTION OF THE DRAWINGS

When using the term "radial" it is appropriate to make a distinction between several different ways in which those skilled in the art use that term. First, the expression refers to a radius of the tyre. It is within this meaning that a point P1 is said to be "radially inside" a point P2 (or "radially on the inside of" the point P2) if it is closer to the axis of rotation of the tyre than is the point P2. Conversely, a point P3 is said to be "radially outside" a point P4 (or "radially on the outside of" the point P4) if it is further from the axis of rotation of the tyre than is the point P4. Progress will be said to be being made "radially inwards (or outwards)" when it is being made in the direction of smaller (or larger) radii. Where radial distances are involved, it is this meaning of the term which applies also.

By contrast, a thread or a reinforcement is said to be "radial" when the thread or the reinforcing elements of the reinforcement make an angle greater than or equal to 80° and less than or equal to 90° with the circumferential direction. It should be noted that in this document, the term "thread" is to be understood in its broadest sense and to comprise threads in the form of monofilaments, multifilaments, a cord, a yarn or an equivalent assembly, irrespective of the material of which the thread is made and irrespective of the surface treatment it may have undergone to enhance its bonding with the rubber.

Finally, a "radial cross section" or "radial section" is to be understood here to mean a cross section or section in a plane containing the axis of rotation of the tyre.

An "axial" direction is a direction parallel to the axis of rotation of the tyre. A point P5 is said to be "axially inside" a point P6 (or "axially on the inside of" the point P6) if it is closer to the median plane of the tyre than is the point P6. Conversely, a point P7 is said to be "axially outside" a point P8 (or "axially on the outside of" the point P8) if it is further from the median plane of the tyre than is the point P8. The "median plane" of the tyre is the plane perpendicular to the axis of rotation of the tyre and which is situated midway between the annular reinforcing structures of each bead. When it is said that the median plane in any radial section divides the tyre into two tyre "halves" that should not be understood to mean that the median plane necessarily constitutes a plane of symmetry of the tyre. The expression "tire half" here has a broader meaning and denotes a portion of the tyre that has an axial width of about half the axial width of the tyre.

A "circumferential" direction is a direction which is perpendicular both to a radius of the tyre and to the axial direction.

Within the context of this document, the expression "rubber compound" denotes a rubber compound containing at least one elastomer and one filler.

The "elastic modulus" of a rubber compound is to be understood to mean the secant tensile modulus obtained under traction in accordance with standard ASTM D 412 (1998) (test specimen "C"): one measures the apparent secant moduli at 10% elongation, denoted "MA10" and expressed in MPa (under normal temperature and hygrometric conditions in accordance with ASTM D 1349 (1999)) during the second elongation (that is to say after an accommodation cycle).

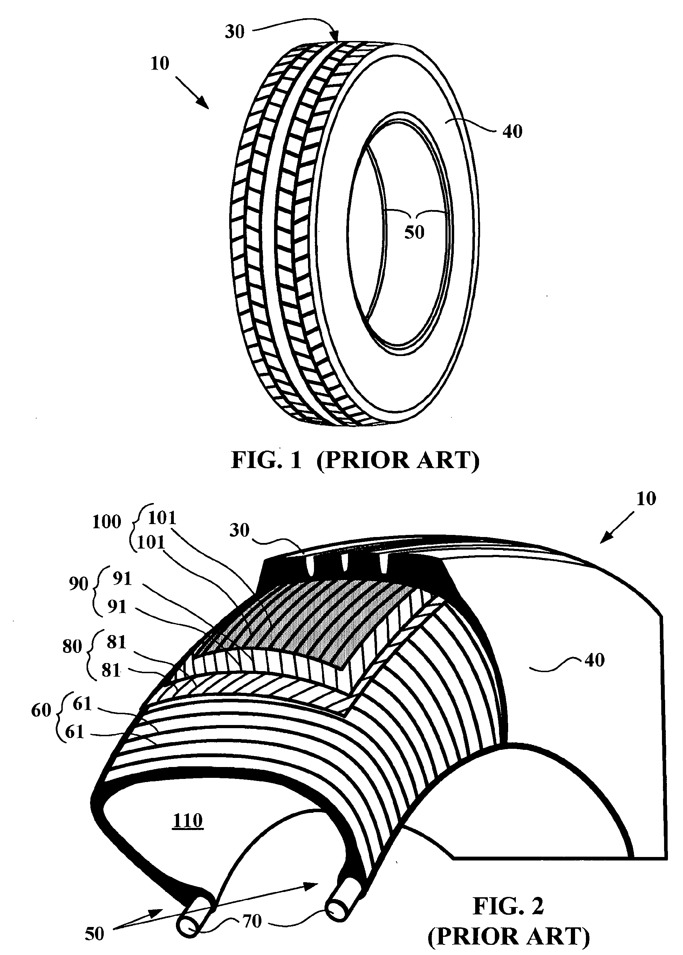

Figure 1 schematically depicts a tyre 10 according to the prior art. The tyre 10 comprises a crown comprising a crown reinforcement (not visible in Figure 1) surmounted by a tread 30, two sidewalls 40 extending the crown radially inwards, and two beads 50 radially on the inside of the sidewalls 40.

Figure 2 schematically depicts a partial perspective view of another tyre 10 according to the prior art and illustrates the various components of the tyre. The tyre 10 comprises a carcass reinforcement 60 made up of threads 61 coated with rubber compound, and two beads 50 each comprising circumferential reinforcing structures 70 (in this embodiment bead wires) which hold the tyre 10 on the rim (not depicted). The carcass reinforcement 60 is anchored in each of the beads 50. The tyre 10 further comprises a crown reinforcement comprising two plies 80 and 90. Each of the plies 80 and 90 is reinforced with threadlike reinforcing elements 81 and 91 which are parallel within each layer and crossed from one layer to the other, making angles of between 10° and 70° with the circumferential direction. The tyre further comprises a hooping reinforcement 100 positioned radially on the outside of the crown reinforcement, this hooping reinforcement being formed of reinforcing elements 101 directed circumferentially and wound in a spiral. A tread 30 is laid on the hooping reinforcement; it is this tread 30 which provides contact between the tyre 10 and the road surface. The tyre 10 depicted is a tubeless tyre: it comprises an "inner liner" 110 made of a rubber compound impervious to the inflation gas, covering the interior surface of the tyre.

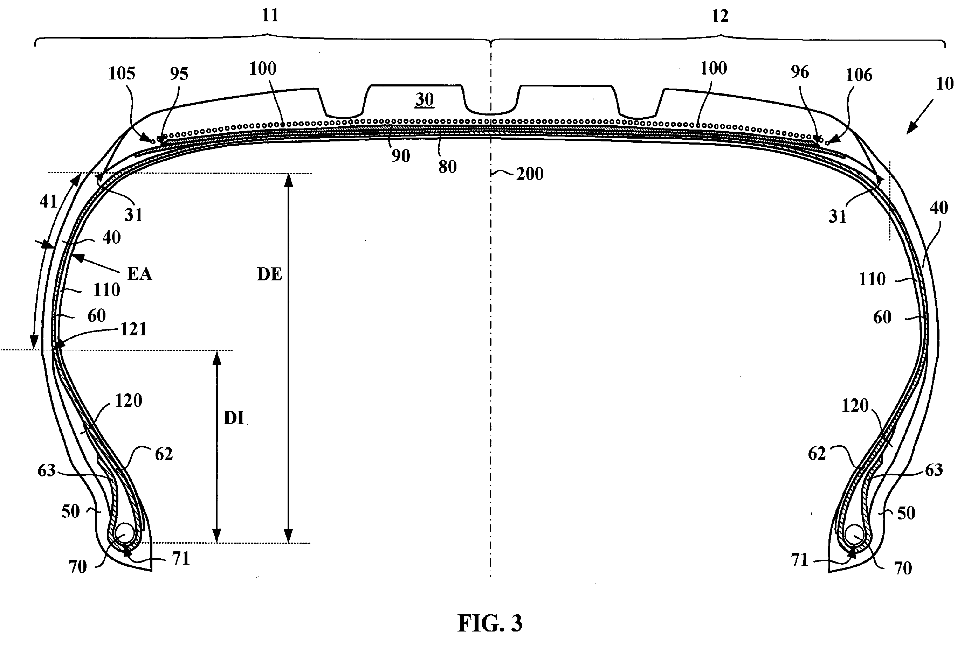

Figure 3 schematically depicts, in radial cross section, one portion of a tyre 10. This tyre 10 comprises two beads 50 configured to come into contact with a mounting rim (not depicted). Each bead comprises an annular reinforcing structure 70 (in this embodiment a bead wire). The reference 71 denotes the radially innermost point of the annular reinforcing structure 70.

Two sidewalls 40 extend the beads 50 radially outwards and meet in a crown comprising a crown reinforcement formed by the layers 80 and 90 and a hooping reinforcement 100 positioned radially on the outside of the crown reinforcement and surmounted by a tread 30 made of at least one first rubber compound.

The hooping reinforcement 100 is formed, in a way known to those skilled in the art, of at least one circumferentially directed reinforcing element. The figure shows a plurality of intersections (drawn in the form of circles) between the hooping reinforcement 100 and the plane of section.

The reference 200 denotes the median plane which divides the tyre into two halves 11 and 12.

The crown reinforcement comprises a radially inner layer 80 and a radially outer layer 90, each of the layers being reinforced with threadlike reinforcing elements, the reinforcing elements of each layer being parallel to one another, the reinforcing elements of the two layers being crossed with respect to one another.

The radially outer layer 90 of the crown reinforcement extends axially, in each radial section, on each side of the median plane 200 of the tyre, between two axial ends 95 and 96 of the outer layer. Likewise, the hooping reinforcement 100 extends axially on each side of the median plane 200 of the tyre, between two axial ends 105 and 106 of the hooping reinforcement 100. In each tyre half 11 and 12, the axial end of the hooping reinforcement is situated axially on the outside of the axial end of the outer layer.

The tyre 10 further comprises a carcass reinforcement 60 running from the beads 50 through the sidewalls 40 as far as the crown. The carcass reinforcement comprises a plurality of carcass reinforcing elements; it is anchored in the two beads by being turned back around the bead wire 70, so as to form, within each bead, a main portion 62 and a wrapped-around portion 63.

Each half 11 and 12 of the tyre further comprises an outer strip 120 made of a second rubber compound and positioned at least partially axially on the outside of the wrapped-around portion 63 of the carcass reinforcement 60, each outer strip running radially as far as a radially outer end 121, DI denoting the radial distance between the radially outer end 121 of the outer strip 120 and the radially innermost point 71 of the annular reinforcing structure 70.

The tread 30 comprises, in each half of the tyre, a radially innermost point 31, DE denoting the radial distance between this radially innermost point 31 of the tread 30 and the radially innermost point 71 of the annular reinforcing structure 70.

The sidewall 40 comprises, in each tyre half, a first sidewall part 41 located at radial distances that are greater than or equal to DI and less than or equal to DE from the radially innermost point of the annular reinforcing structure. Sidewall part 41 is made of at least one third rubber compound distinct from said at least one first and second rubber compounds from which the tread and the outer strip are made. As a consequence, it is possible to discern the extent of this sidewall part in relation to the tread 30 and the outer strip 120 on a tyre cut. The third rubber compound has an elastic modulus E that is greater than or equal to 1.5 MPa and less than or equal to 10 MPa.

The sidewall, in the first sidewall part, has a mean thickness EA, this thickness being measured perpendicular to the carcass reinforcement.

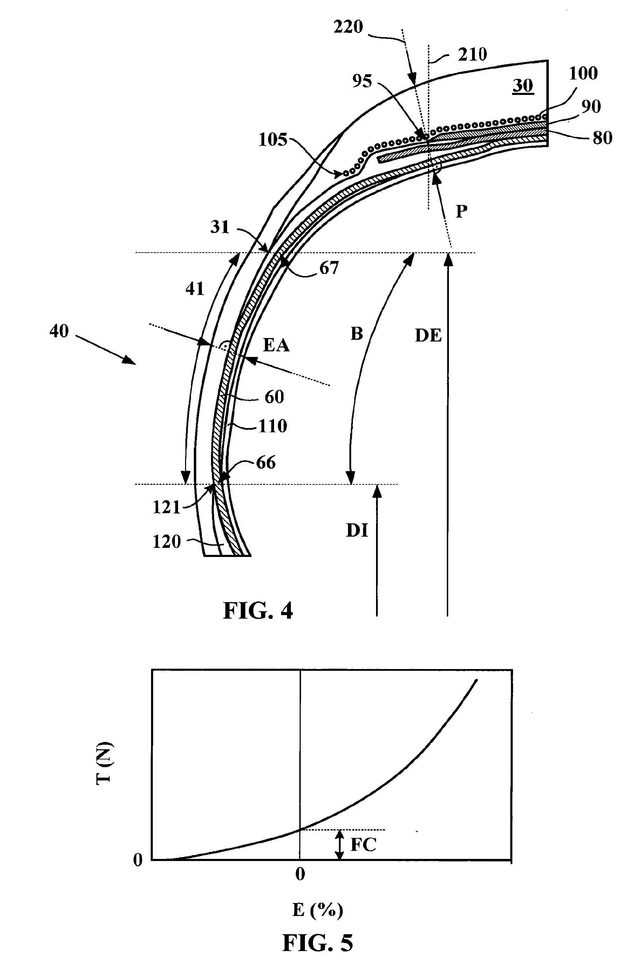

Figure 4 depicts, in radial section, a portion of a tyre according to an embodiment of the invention. Only the portions of the tyre showing features that characterize the invention have been shown.

It is possible to discern the axially outer parts of the layers 80 and 90 of the crown reinforcement and of the hooping reinforcement 100, which is positioned radially on the outside of the crown reinforcement and surmounted by a tread 30 made of at least one first rubber compound.

The hooping reinforcement 100 is formed, in a way known to those skilled in the art, of at least one circumferentially directed reinforcing element. The figure shows a plurality of intersections (drawn in the form of circles) between the hooping reinforcement 100 and of the plane of section. It is made of a textile material having a shrinkage force at 180°C (FC) that is less than or equal to 12 N.

Each of the radially inner layer 80 and radially outer layer 90 that make up the crown reinforcement is reinforced with threadlike reinforcing elements (not shown), the reinforcing elements in each layer being parallel to one another, the reinforcing elements of the two layers being crossed with respect to one another. For preference, in a tyre according to an embodiment of the invention, the thread density is greater than or equal to 60 and less than or equal to 125 threads per decimetre.

The radially outer layer 90 of the crown reinforcement extends axially as far as an axial end 95 of the outer layer. Likewise, the hooping reinforcement 100 extends axially as far as an axial end 105 of the hooping reinforcement 100. In a tyre according to an embodiment of the invention, in each tyre half, the axial end 105 of the hooping reinforcement 100 is situated axially on the outside of the axial end 95 of the outer layer so that, in each tyre half, a non-zero number of intersections NC (in this embodiment thirteen intersections) lies axially on the outside of the axial end of the outer layer 90 of the crown reinforcement, the axial position of which is indicated by the line 210.

Figure 4 also shows the radially outer part of the outer strip 120, made of a second rubber compound. The outer strip extends radially as far as a radially outer axial end 121, DI denoting the radial distance between the radially outer axial end 121 of the outer strip 120 and the radially innermost point 71 of the annular reinforcing structure 70 (not depicted).

Also visible is the radially innermost point 31 of the tread, DE denoting the radial distance between this radially innermost point 31 of the tread 30 and the radially innermost point 71 of the annular reinforcing structure 70 (not depicted).

The sidewall 40 comprises, a first sidewall part (indicated using the double arrows 41), located at radial distances that are greater than or equal to DI and less than or equal to DE from the radially innermost point of the annular reinforcing structure. Sidewall part 41 is made of at least one third rubber compound distinct from said at least one first and second rubber compounds from which the tread 30 and the outer strip 120 are made. The third rubber compound has an elastic modulus E greater than or equal to 1.5 MPa and less than or equal to 10 MPa.

The sidewall, in the first sidewall part, has a mean thickness EA, this thickness being measured perpendicular to the carcass reinforcement 60.

Let P be the thickness of the tyre, measured in a direction 220 perpendicular to the carcass reinforcement 60 and intersecting the axial end 95 of the radially outer layer 90 of the crown reinforcement, and let B be the curvilinear length of the carcass reinforcement 60 between (a) a point 66 on the carcass reinforcement 60 situated a distance DI away from the radially innermost point 71 of the annular reinforcing structure 70 (not depicted in Figure 4) and (b) a point 67 on the carcass reinforcement 60 situated a distance DE away from the radially innermost point 71 of the annular reinforcing structure 70. (In order not to overload Figure 4, the arrow indicating the curvilinear length B has been axially offset in relation to the carcass 60).

The applicant has noted that the parameter $K = 100 \cdot \left( \dfrac{E \cdot EA^2 \cdot P}{B \cdot NC \cdot FC} \right)$ is very relevant in detecting the vulnerability of a tyre design to the "rippling" phenomenon. In order to obtain a tyre that is resistant to this sidewall appearance defect, the elastic modulus E, the mean thickness EA, the number of intersections NC and the shrinkage force at 180°C (FC) need to be chosen so that, in each sidewall of the tyre, K < 16 and, more preferably still, K < 11.

Let us now describe how the " shrinkage force at 180°C" FC is determined. In order to determine the force of shrinkage, at high temperatures, of a textile reinforcement, the force-elongation curve of the reinforcement placed in a furnace set to a constant temperature of $180 \pm 0.5$°C is determined. Figure 5 shows an example of a curve that might be obtained.

More specifically, the reinforcement is placed under very light pretension (0.5 cN/tex), then the reinforcement is heated to a temperature of 180°C, maintaining the pretension. When the temperature is reached, tension is applied to the thread.

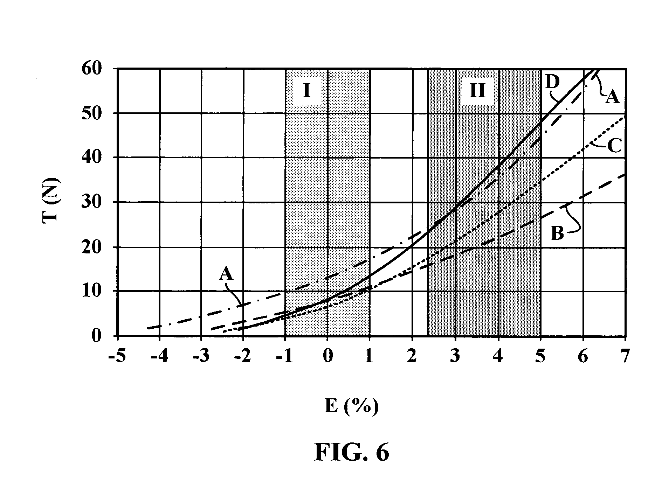

Note that unlike the more conventional force-elongation curves which are determined at ambient temperature, the curves set out in Figures 5 and 6 have been obtained at 180°C. As the reinforcements shrink under the influence of temperature and revert to their initial length only when they have been tensioned, the elongation E, in terms of the length of the reinforcement at ambient temperature, is negative at zero tension T. The value of the elongation at zero tension T correlates directly with the "thermal shrinkage potential" of the reinforcement used.

The shrinkage force at 180°C (FC) is defined as being the force developed as the specimen reverts to 0% deformation. Another important parameter is the force developed at around 3% deformation because, bearing in mind the temperature and centrifugal effects generated by speed, this is a typical operating point of the tyre running at its maximum speed, that is to say at the highest speed at which the tyre can run without sustaining damage.

The "thermal shrinkage potential" (CC) is a parameter well known to those skilled in the art and expresses the relative variation in length of a reinforcement positioned under a pretension of 0.5 cN/tex (remember that 1 cN/tex is equal to 0.11 gram/denier) between the plates of a furnace (equipment of the Testrite type) set to a constant temperature of $185 \pm 0.5$°C. The thermal shrinkage potential is expressed in % via the following formula:

$$CC \ [\%] = 100 \cdot \left| \frac{L_0 - L_1}{L_0} \right|$$

where $L_0$ is the initial length of the reinforcement at ambient temperature and $L_1$ is the length of this same reinforcement at 185°C. The length $L_1$ is measured after the reinforcement has stabilized for a period of 120 s $\pm$ 2% at 185°C. For textile reinforcements, the thermal shrinkage potential is the result of all of the operations that the reinforcement underwent while it was being produced or worked.

Most of the textiles customarily used as reinforcing elements in passenger car tyre hooping reinforcements have a relatively high shrinkage force and a relatively high thermal shrinkage potential. Thus, the nylon cords (2 $\times$ 140 tex) marketed by the company Yarnea have a thermal shrinkage force of about 14 N and a thermal shrinkage potential of 10.7%.

It should be noted that the values claimed for the shrinkage force at 180°C are obtained on reinforcements before they are incorporated into the tyre. In theory, it is also possible to determine the shrinkage force of a reinforcement after it has been extracted from the tyre, but it then becomes necessary to take measurements from threads extracted from the median plane of the tyre because at this point the presence of the crown reinforcement greatly reduces the changes in microstructure during curing and the cooling that follows, which means that the values of FC and CC remain the same.

Good results have been obtained with reinforcing elements made of polyester. In the polyester category, mention may, for example, be made of PET (polyethylene terephthalate, PEN (polyethylene naphthalate), PBT (polybutylene terephthalate), PBN (polybutylene naphthalate), PPT (polypropylene terephthalate), PPN (polypropylene naphthalate).

Figure 6 shows the force/elongation curve for four types of textile reinforcing elements. It gives the values of tension (in N) needed to obtain a certain elongation (in %) at a temperature of 180°C. The figures particularly highlight two elongation domains: the low elongation domain indicated by "I" is the domain of the elongations through which the reinforcements pass during the manufacture of the tyres; the domain indicated by "II" corresponds to the domain in which the hooping reinforcement is situated when the tyre is in use and therefore determines the effectiveness of the hooping reinforcement. The gradient of the force-elongation curve for a reinforcing element corresponds to the modulus of the reinforcing element. In order to act as a hooping reinforcement without jeopardizing the manufacturing method, a reinforcing element needs to develop a low force in domain I and to develop a significant force in domain II.

Table I indicates the nature of the reinforcing elements, the force-elongation curves of which are given in Figure 6:

| Curve | Line style | Material | Structure | TPM [1] | FC [N] | CC [%] |
|---|---|---|---|---|---|---|
| "A" | dash-dotted | nylon | $2 \times 140$ tex | 250 | 13.4 | 7 |
| "B" | dashed | nylon | $2 \times 140$ tex | 250 | 8.0 | 3.7 |
| "C" | dotted | PET | $2 \times 110$ tex | 470 | 8.6 | 2.2 |
| "D" | solid | PET | $2 \times 144$ tex | 420 | 6.8 | 2.2 |
| [1] turns per metre | | | | | | |

As can be seen clearly in Figure 6, the reinforcing elements of type "C" and "D" make it possible to obtain forces comparable with the reinforcing element of type "A" in domain II and a markedly lower force than the type "A" reinforcing element in domain I, and this is beneficial in reducing sidewall rippling, whereas the reinforcing element of type "B" develops a force similar to that of the type "C" and "D" reinforcing elements in domain I, but also develops a lower force in domain II and will therefore be less effective as a reinforcing element for the hooping reinforcement.

Table II shows the results obtained for various tyres and allows the relevance of the choice of the criterion K to be assessed:

Table II

| Tyre | Size | E [MPa] | EA [mm] | P [mm] | B [mm] | NC | FC [N] | K | FR [1] |
|---|---|---|---|---|---|---|---|---|---|
| 1 | 205/55 R 16 | 2.37 | 4.7 | 12 | 40.0 | 13 | 13.4 | 9 | R |
| 2 | 205/55 R 16 | 2.31 | 3.9 | 12 | 40.3 | 10 | 13.4 | 8 | R |
| 3 | 225/55 R 16 | 2.36 | 4.5 | 12 | 34.7 | 13 | 13.4 | 9 | R |
| 4 | 205/55 R 16 | 2.35 | 4.4 | 12 | 45.0 | 10 | 13.4 | 9 | R |
| 5 | 205/55 R 16 | 2.37 | 4.7 | 12 | 25.0 | 10 | 13.4 | 19 | F |
| 6 | 185/55 R 15 | 2.35 | 4.4 | 12 | 56.0 | 3 | 13.4 | 24 | F |
| 7 | 205/65 R 15 | 2.39 | 4.3 | 12 | 54.0 | 3 | 13.4 | 24 | F |
| 8 | 195/55 R 16 | 2.37 | 5 | 12 | 25.8 | 3 | 13.4 | 69 | F |
| [1] frequency at which the sidewall appearance defect occurs (F: frequent; R: rare) | | | | | | | | | |

## Claims

1.  Tyre (10) comprising:

    two beads (50) configured to come into contact with a mounting rim, each bead comprising at least one annular reinforcing structure (70), the annular reinforcing structure having, in any radial section, at least one radially innermost point (71);
    two sidewalls (40) extending the beads radially outwards, the two sidewalls joining together in a crown comprising a crown reinforcement (80,90) and a hooping reinforcement (100), positioned radially on the outside of the crown reinforcement and surmounted by a tread (30) made of at least one first rubber compound;

a carcass reinforcement (60) extending from the beads through the sidewalls as far as the crown, the carcass reinforcement comprising a plurality of carcass reinforcing elements (61) and being anchored in the two beads by turning back around the annular reinforcing structure so as to form, within each bead, an main portion (62) and a wrapped-around portion (63);

the tyre having a median plane (200) which, in any radial section, divides the tyre into two tyre halves (11, 12), each tyre half further comprising at least one outer strip (120) made of at least one second rubber compound and positioned at least partially axially on the outside of the wrapped-around portion of the carcass reinforcement, each outer strip extending radially as far as a radially outer end (121), DI denoting the radial distance between the radially outer end of the outer strip and the radially innermost point of the annular reinforcing structure;

the tread comprising, in any radial section and in each tyre half, at least one radially innermost point (31), DE denoting the radial distance between this radially innermost point of the tread and the radially innermost point of the annular reinforcing structure;

wherein the crown reinforcement comprises a radially inner layer (80) and a radially outer layer (90), each of the layers being reinforced with threadlike reinforcing elements, the reinforcing elements in each layer being substantially parallel to one another, the reinforcing elements in the two layers being crossed with respect to one another;

wherein the radially outer layer of the crown reinforcement extends axially, in each radial section, on each side of the median plane of the tyre, between two axial ends (95,96) of the outer layer, the hooping reinforcement extending axially on each side of the median plane of the tyre between two axial ends (105,106) of the hooping reinforcement such that, in each tyre half, the axial end of the hooping reinforcement is situated axially on the outside of the axial end of the outer layer;

the sidewall comprising, in each tyre half, a first sidewall part (41) located at radial distances that are greater than or equal to DI and less than or equal to DE from the radially innermost point of the annular reinforcing structure, said first sidewall part being made of at least one third rubber compound distinct from said at least one first and second rubber compounds from which the tread and said outer strip are made, said at least one third rubber compound having an elastic modulus E greater than or equal to 1.5 MPa and less than or equal to 10 MPa;

the sidewall having, in said first sidewall part, a mean thickness EA, this thickness being measured perpendicular to the carcass reinforcement;

the hooping reinforcement being made of a textile material having a shrinkage force FC at 180°C that is less than or equal to 12 N, the hooping reinforcement being formed of at least one reinforcing element (101) directed circumferentially, the hooping reinforcement having, in any radial section, a plurality of intersections with the plane of section such that, in each tyre half, a non-zero number NC of intersections is situated axially on the outside of the axial end of the outer layer of the crown reinforcement;

wherein the elastic modulus E, the mean thickness EA, the number of intersections NC and the shrinkage force FC at 180°C are chosen such that for each sidewall of the tyre, the following inequality is satisfied:

$$K = 100 \cdot \left( \frac{E \cdot EA^2 \cdot P}{B \cdot NC \cdot FC} \right) < 16$$

where P is the thickness of the tyre measured in a direction perpendicular to the carcass reinforcement and having an intersection with the axial end of the outer layer of the crown reinforcement which lies in the same tyre half as the sidewall, and where B is the curvilinear length of the carcass reinforcement between (a) a point (66) on the carcass reinforcement that is at a distance DI with respect to the radially innermost point of the annular reinforcing structure, and (b) a point (67) on the carcass reinforcement that is at a distance DE with respect to the radially innermost point of the annular reinforcing structure.

2. Tyre according to Claim 1, wherein the elastic modulus E, the mean thickness EA, the number of intersections NC, and the shrinkage force FC at 180°C are chosen such that for each sidewall of the tyre, K < 11.

3. Tyre according to any one of Claims 1 or 2, wherein the elastic modulus E is less than or equal to 3 MPa.

4. Tyre according to any one of Claims 1 to 3, wherein the mean thickness EA is greater than or equal to 2 mm and less than or equal to 5 mm.

5. Tyre according to any one of Claims 1 to 4, wherein the number of intersections NC is greater than or equal to 3 and less than or equal to 15.

6. Tyre according to any one of Claims 1 to 5, wherein the thickness P of the tyre is greater than or equal to 8 mm and less than or equal to 15 mm.

7. Tyre according to any one of Claims 1 to 6, wherein the hooping reinforcement (100) is made of polyester.

8. Tyre according to Claim 7, wherein the hooping reinforcement (100) is made of PET (polyethylene terephthalate).

9. Tyre according to Claim 7, wherein the hooping reinforcement (100) is made of PEN (polyethylene naphthalate).

10. Tyre according to Claim 7, wherein the hooping reinforcement (100) is made of PK (polyketone).

11. Tyre according to any one of the preceding claims, wherein the shrinkage force FC at 180°C of the material of which the hooping reinforcement is made is greater than or equal to 3 N and less than or equal to 9 N.

12. Tyre according to any one of the preceding claims, wherein the force developed at 180°C at 3% deformation of the material from which the hooping reinforcement is made is greater than or equal to 25 N.

**Patentansprüche**

1. Reifen (10), der Folgendes umfasst:

zwei Reifenwulste (50), die dazu konfiguriert sind, mit einer Montagefelge in Kontakt zu kommen, wobei jeder Reifenwulst mindestens eine ringförmige Verstärkungsstruktur (70) umfasst, wobei die ringförmige Verstärkungsstruktur in jedem Radialschnitt mindestens einen radial innersten Punkt (71) aufweist;
zwei Seitenwände (40), welche die Reifenwulste radial nach außen verlängern, wobei die zwei Seitenwände in einer Laufflächenkrone zusammentreffen, die eine Laufflächenkronenverstärkung (80,90) und eine Umreifungsverstärkung (100) umfasst, die radial auf der Außenseite der Laufflächenkronenverstärkung positioniert ist und von einer Lauffläche (30) überlagert wird, die aus mindestens einer ersten Kautschukmischung hergestellt ist;
eine Karkassenverstärkung (60), die sich von den Reifenwulsten durch die Seitenwände bis hin zu der Laufflächenkrone erstreckt, wobei die Karkassenverstärkung mehrere Karkassenverstärkungselemente (61) umfasst und in den beiden Reifenwulsten verankert ist, indem sie um die ringförmige Verstärkungsstruktur zurückverläuft, um innerhalb jedes Reifenwulstes einen Hauptabschnitt (62) und einen umwickelten Abschnitt (63) zu bilden;
wobei der Reifen eine Mittelebene (200) aufweist, die in jedem Radialschnitt den Reifen in zwei Reifenhälften (11, 12) unterteilt,
wobei jede Reifenhälfte ferner mindestens einen Außenstreifen (120) umfasst, der aus mindestens einer zweiten Kautschukmischung hergestellt ist und mindestens teilweise axial an der Außenseite des umwickelten Abschnitts der Karkassenverstärkung positioniert ist, wobei jeder Außenstreifen radial bis zu einem radial äußeren Ende (121) verläuft, wobei DI den radialen Abstand zwischen dem radial äußeren Ende des Außenstreifens und dem radial innersten Punkt der ringförmigen Verstärkungsstruktur bezeichnet;
wobei die Lauffläche in jedem Radialschnitt und in jeder Reifenhälfte mindestens einen radial innersten Punkt (31) umfasst, wobei DE den radialen Abstand zwischen diesem radial innersten Punkt der Lauffläche und dem radial innersten Punkt der ringförmigen Verstärkungsstruktur bezeichnet;
wobei die Laufflächenkronenverstärkung eine radial innere Schicht (80) und eine radial äußere Schicht (90) umfasst, wobei jede der Schichten mit filamentartigen Verstärkungselementen verstärkt ist, wobei die Verstärkungselemente in jeder Schicht im Wesentlichen parallel zueinander sind, wobei die Verstärkungselemente in den beiden Schichten zueinander gekreuzt sind;
wobei sich die radial äußere Schicht der Laufflächenkronenverstärkung in jedem Radialschnitt auf jeder Seite der Mittelebene des Reifens zwischen zwei axialen Enden (95,96) der äußeren Schicht axial erstreckt,
wobei die Umreifungsverstärkung auf jeder Seite der Mittelebene des Reifens zwischen zwei axialen Enden (105,106) der Umreifungsverstärkung derart axial verläuft, dass sich in jeder Reifenhälfte das axiale Ende der Umreifungsverstärkung axial auf der Außenseite des axialen Endes der äußeren Schicht befindet;
wobei die Seitenwand in jeder Reifenhälfte einen ersten Seitenwandteil (41) umfasst, der in radialen Abständen, welche größer gleich DI und kleiner gleich DE sind, zum radial innersten Punkt der ringförmigen Verstärkungsstruktur angeordnet ist, wobei der erste Seitenwandteil aus mindestens einer dritten Kautschukmischung hergestellt ist, die sich von der mindestens einen ersten und der mindestens einen zweiten Kautschukmischung, aus denen die Lauffläche und der Außenstreifen hergestellt sind, unterscheidet wobei die mindestens eine dritte Kautschukmischung einen Elastizitätsmodul E aufweist, der größer gleich 1,5 MPa und kleiner gleich 10 MPa ist; wobei die Seitenwand im ersten Seitenwandteil eine mittlere Dicke EA aufweist, wobei diese Dicke lotrecht zur Karkassenverstärkung gemessen wird;

wobei die Umreifungsverstärkung aus einem Textilmaterial mit einer Schrumpfkraft FC hergestellt ist, die bei 180°C kleiner gleich 12 N ist, wobei die aus mindestens einem Verstärkungselement (101) geformte Umreifungsverstärkung umfänglich ausgerichtet ist, wobei die Umreifungsverstärkung in jedem radialen Abschnitt mehrere Schnittpunkte mit der Schnittebene aufweist, so dass sich in jeder Reifenhälfte eine Zahl NC ungleich null an Schnittpunkten axial auf der Außenseite des axialen Endes der äußeren Schicht der Laufflächenkronenverstärkung befindet;

wobei der Elastizitätsmodul E, die mittlere Dicke EA, die Anzahl an Schnittpunkten NC und die Schrumpfkraft FC bei 180°C so ausgewählt sind, dass für jede Seitenwand des Reifens die nachfolgende Ungleichung erfüllt ist:

$$K = 100 \cdot \left( \frac{E \cdot EA^2 \cdot P}{B \cdot NC \cdot FC} \right) < 16$$

wobei P die Dicke des Reifens ist, die in einer Richtung lotrecht zur Karkassenverstärkung gemessen wird und einen Schnittpunkt mit dem axialen Ende der äußeren Schicht der Laufflächenkronenverstärkung aufweist, das in der gleichen Reifenhälfte wie die Seitenwand liegt, und wobei B die krummlinige Länge der Karkassenverstärkung zwischen (a) einem Punkt (66) auf der Karkassenverstärkung, der sich in einem Abstand DI in Bezug auf den radial innersten Punkt der ringförmigen Verstärkungsstruktur befindet, und (b) einem Punkt (67) auf der Karkassenverstärkung, der sich in einem Abstand DE in Bezug auf den radial innersten Punkt der ringförmigen Verstärkungsstruktur befindet, ist.

2. Reifen nach Anspruch 1, wobei der Elastizitätsmodul E, die mittlere Dicke EA, die Anzahl an Schnittpunkten NC und die Schrumpfkraft FC bei 180°C so ausgewählt sind, dass für jede Seitenwand des Reifens K < 11.

3. Reifen nach einem der Ansprüche 1 oder 2, wobei der Elastizitätsmodul E kleiner gleich 3 MPa beträgt.

4. Reifen nach einem der Ansprüche 1 bis 3, wobei die mittlere Dicke EA größer gleich 2 mm und kleiner gleich 5 mm ist.

5. Reifen nach einem der Ansprüche 1 bis 4, wobei die Anzahl an Schnittpunkten NC größer gleich 3 und kleiner gleich 15 ist.

6. Reifen nach einem der Ansprüche 1 bis 5, wobei die Dicke P des Reifens größer gleich 8 mm und kleiner gleich 15 mm ist.

7. Reifen nach einem der Ansprüche 1 bis 6, wobei die Umreifungsverstärkung (100) aus Polyester hergestellt ist.

8. Reifen nach Anspruch 7, wobei die Umreifungsverstärkung (100) aus PET (Polyethylenterephthalat) hergestellt ist.

9. Reifen nach Anspruch 7, wobei die Umreifungsverstärkung (100) aus PEN (Polyethylennaphthalat) hergestellt ist.

10. Reifen nach Anspruch 7, wobei die Umreifungsverstärkung (100) aus PK (Polyketon) hergestellt ist.

11. Reifen nach einem der vorangehenden Ansprüche, wobei die Schrumpfkraft FC bei 180°C des Materials, aus dem die Umreifungsverstärkung hergestellt ist, größer gleich 3 N und kleiner gleich 9 N ist.

12. Reifen nach einem der vorangehenden Ansprüche, wobei die Kraft, die bei 180°C bei 3% Verformung des Materials, aus dem die Umreifungsverstärkung hergestellt ist, entwickelt wird, größer gleich 25 N ist.

**Revendications**

1.  Pneumatique (10) comportant :

    deux bourrelets (50) destinés à entrer en contact avec une jante de montage, chaque bourrelet comportant au moins une structure annulaire de renforcement (70), la structure annulaire de renforcement possédant, dans toute section radiale, au moins un point (71) radialement le plus à l'intérieur;
    deux flancs (40) prolongeant les bourrelets radialement vers l'extérieur, les deux flancs s'unissant dans un sommet comprenant une armature de sommet (80,90) et une armature de frettage (100), disposée radialement à l'extérieur de l'armature de sommet et surmontée d'une bande de roulement (30) réalisée dans au moins une première composition caoutchouteuse,
    une armature de carcasse (60) s'étendant depuis les bourrelets à travers les flancs jusqu'au sommet, l'armature de carcasse comportant une pluralité d'éléments de renforcement (61) de carcasse et étant ancrée dans les deux bourrelets par un retournement autour de la structure annulaire de renforcement, de manière à former dans chaque bourrelet un brin aller (62) et un brin retour (63) ;
    le pneumatique ayant un plan médian (200) divisant, dans toute section radiale, le pneumatique en deux moitiés de pneumatique (11,12),
    chaque moitié du pneumatique comportant en outre au moins une bande extérieure (120) réalisée dans au moins une deuxième composition caoutchouteuse et placée au moins partiellement axialement à l'extérieur du brin retour de l'armature de carcasse, chaque bande extérieure s'étendant radialement jusqu'à une extrémité (121) radialement extérieure, la grandeur DI désignant la distance radiale entre l'extrémité radialement extérieure de la bande extérieure et le point radialement le plus à l'intérieur de la structure annulaire de renforcement,
    la bande de roulement comportant, dans toute section radiale et dans chaque moitié de pneumatique, au moins un point (31) radialement le plus à l'intérieur, la grandeur DE désignant la distance radiale entre ce point radialement le plus à l'intérieur de la bande de roulement et le point radialement le plus à l'intérieur de la structure annulaire de renforcement ;
    dans lequel l'armature de sommet comporte une couche (80) radialement intérieure et une couche (90) radialement extérieure, chacune des couches étant renforcée par des éléments de renforcement filaires, les éléments de renforcement de chaque couche étant substantiellement parallèles les uns aux autres, les éléments de renforcement des deux couches étant croisés les uns par rapport aux autres,
    dans lequel la couche radialement extérieure de l'armature de sommet s'étend axialement, dans chaque section radiale, de part et d'autre du plan médian du pneumatique, entre deux extrémités axiales (95,96) de couche extérieure,
    l'armature de frettage s'étendant axialement de part et d'autre du plan médian du pneumatique, entre deux extrémités axiales (105,106) d'armature de frettage, de sorte que, dans chaque moitié de pneumatique, l'extrémité axiale d'armature de frettage se situe axialement à l'extérieur de l'extrémité axiale de couche extérieure ;
    le flanc comportant, dans chaque moitié de pneumatique, dans une première partie (41) de flanc, formée par l'ensemble des points du flanc ayant une distance radiale DF par rapport au point radialement le plus à l'intérieur de la structure annulaire de renforcement, la distance radiale DF étant supérieure ou égale à DI et inférieure ou égale à DE, une portion de flanc réalisée dans au moins une troisième composition caoutchouteuse distincte desdites au moins une première et deuxième compositions caoutchouteuses dans laquelle la bande de roulement et ladite bande extérieure sont réalisées, ladite au moins une troisième composition caoutchouteuse ayant un module d'élasticité E supérieur ou égal à 1.5 MPa et inférieur ou égal à 10 MPa ;
    le flanc ayant, dans ladite première partie de flanc, une épaisseur moyenne EA, cette épaisseur étant mesurée perpendiculairement à l'armature de carcasse ;
    l'armature de frettage étant réalisée dans un matériau textile ayant une force de contraction à 180° C (FC) inférieure ou égale à 12 N, l'armature de frettage étant formée d'au moins un élément de renforcement (101) orienté circonférentiellement, l'armature de frettage ayant, dans toute section radiale, une pluralité d'intersections avec le plan de section, de sorte que, dans chaque moitié de pneumatique, un nombre NC non nul d'intersections se situe axialement à l'extérieur de l'extrémité axiale de couche extérieure de l'armature de sommet ;
    le pneumatique étant **caractérisé en ce que** le module d'élasticité E, l'épaisseur moyenne EA, le nombre d'intersections NC et la force de contraction à 180° C (FC), sont choisis tels que pour chaque flanc du pneumatique, l'inégalité suivante est vérifiée :

$$K = 100 \cdot \left( \frac{E \cdot EA^2 \cdot P}{B \cdot NC \cdot FC} \right) < 16$$

où P est l'épaisseur du pneumatique mesurée le long d'une direction perpendiculaire à l'armature de carcasse et ayant une intersection avec l'extrémité axiale de couche extérieure de l'armature de sommet qui se trouve dans la même moitié de pneumatique que le flanc, et où B est la longueur curviligne de l'armature de carcasse entre (a) un point (66) de l'armature de carcasse ayant une distance DI par rapport au point radialement le plus à l'intérieur de la structure annulaire de renforcement, et (b) un point (67) de l'armature de carcasse ayant une distance DE par rapport au point radialement le plus à l'intérieur de la structure annulaire de renforcement.

2. Pneumatique selon la revendication 1, dans lequel le module d'élasticité E, l'épaisseur moyenne EA, le nombre d'intersections NC et la force de contraction à 180° C (FC), sont choisis tels que pour chaque flanc du pneumatique, K < 11.

3. Pneumatique selon l'une quelconque des revendications 1 ou 2, dans lequel module d'élasticité E est inférieur ou égal à 3 MPa.

4. Pneumatique selon l'une quelconque des revendications 1 à 3, dans lequel l'épaisseur moyenne EA est supérieure ou égale à 2 mm et inférieure ou égale à 5 mm.

5. Pneumatique selon l'une quelconque des revendications 1 à 4, dans lequel le nombre d'intersections NC est supérieur ou égal à 3 et inférieur ou égal à 15.

6. Pneumatique selon l'une quelconque des revendications 1 à 5, dans lequel l'épaisseur P du pneumatique est supérieure ou égale à 8 mm et inférieure ou égale à 15 mm.

7. Pneumatique selon l'une quelconque des revendications 1 à 6, dans lequel l'armature de frettage (100) est réalisée en polyester,

8. Pneumatique selon la revendication 7, dans lequel l'armature de frettage (100) est réalisée en PET (polyéthylène téréphthalate).

9. Pneumatique selon la revendication 7, dans lequel l'armature de frettage (100) est réalisée en PEN (polyéthylène naphthalate).

10. Pneumatique selon la revendication 7, dans lequel l'armature de frettage (100) est réalisé en PK (polycétone).

11. Pneumatique selon l'une quelconque des revendications précédentes, dans lequel la force de contraction à 180° C (FC) du matériau dans lequel l'armature de frettage est réalisée est supérieure ou égale à 3 N et inférieure ou égale à 9 N.

12. Pneumatique selon l'une quelconque des revendications précédentes, dans lequel la force développée à 180° C à 3% de déformation du matériau dans lequel l'armature de frettage est réalisée est supérieure ou égale à 25 N.

**FIG. 1 (PRIOR ART)**

**FIG. 2
(PRIOR ART)**

FIG. 3

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0988159 A